Europäisches Patentamt

European Patent Office

Office européen des brevets

(19)

(11) Veröffentlichungsnummer : **0 427 116 B1**

(12) **EUROPÄISCHE PATENTSCHRIFT**

(45) Veröffentlichungstag der Patentschrift :
**26.01.94 Patentblatt 94/04**

(51) Int. Cl.⁵ : **B60T 1/08,** F16D 57/06

(21) Anmeldenummer : **90120971.8**

(22) Anmeldetag : **02.11.90**

(54) **Bremsleistungswandler.**

(30) Priorität : **04.11.89 DE 3936735**

(43) Veröffentlichungstag der Anmeldung :
**15.05.91 Patentblatt 91/20**

(45) Bekanntmachung des Hinweises auf die
Patenterteilung :
**26.01.94 Patentblatt 94/04**

(84) Benannte Vertragsstaaten :
**AT CH DE ES FR GB IT LI NL**

(56) Entgegenhaltungen :
**DE-A- 1 630 801**
**DE-B- 1 125 300**

(56) Entgegenhaltungen :
**DE-B- 2 757 237**
**GB-A- 2 095 791**
**US-A- 3 521 729**
**US-A- 4 070 070**

(73) Patentinhaber : **KARL SCHAEFF GMBH & CO.**
**MASCHINENFABRIK**
**Seestrasse 17-21**
**D-74595 Langenburg (DE)**

(72) Erfinder : **Schaeff, Hans**
**Haldenstrasse 26**
**W-7183 Langenburg (DE)**

(74) Vertreter : **Raeck, Wilfrid, Dipl.-Ing.**
**Moserstrasse 8**
**D-70182 Stuttgart (DE)**

EP 0 427 116 B1

## Beschreibung

Die Erfindung betrifft einen Bremsleistungswandler in Form einer von mechanischer Reibung unabhängigen Langzeitbremse für ein selbstfahrendes oder gezogenes Fahrzeug, bestehend aus einer vom Schub des Fahrzeuges, proportional zur Fahrgeschwindigkeit angetriebenen und bis zu einer Nullförder- oder Minimalfördermenge verstellbaren hydraulischen Kolbenpumpe, die mit einem druckseitig nachgeschalteten Überdruckventil sowie einer dem Überdruckventil nachgeschalteten Ölkühleinrichtung in einem geschlossen Ölkreislauf angeordnet sind.

Ein aus der DE-B-1 125 300 bekannter Bremsleistungswandler der vorbezeichneten Art ist Bestandteil eines bei Motorfahrzeugen angewendeten hydrostatischen Fahrantriebes. Dieser umfaßt eine vom Fahrzeugmotor angetriebene Axialkolbenpumpe sowie einen die Fahrzeugantriebswelle treibenden Axialkolbenmotor. Kolbenpumpe und Kolbenmotor sind durch einen geschlossenen Hydraulikkreislauf miteinander verbunden, der durch eine von der Pumpe zum Motor verlaufende Hochdruckleitung und eine vom Motor zur Pumpe verlaufende Niederdruckleitung gebildet ist. Von der Niederdruckleitung führt eine unter Umgehung der Pumpe zur Hochdruckleitung verlaufende Nebenleitung, in der die durch den bei Talfahrten als Pumpe wirkenden Motor erzeugte Energie des hydraulischen Arbeitsmittels in Wärme umgewandelt wird, wobei dann der über die Pumpe verlaufende Teil des Hauptkreislaufes gesperrt ist.

Wenn bei einer abzubremsenden Talfahrt des Fahrzeuges der über die Fahrzeugräder von seiner Abtriebsseite her angetriebene Axialkolbenmotor als Pumpe arbeitet, wird die Kolbenpumpe in Nullförderstellung gebracht, so daß der über die Pumpe verlaufende Hydraulikkreislauf gesperrt ist. Das vom Motor geförderte Arbeitsmittel ist dann gezwungen, durch Öffnen eines in der Hochdruckleitung angeordneten Überdruckventils über die Nebenleitung zu entweichen, in der an einer Drosselstelle die Energie des Arbeitsmittels durch hydraulische Reibung in Wärme umgewandelt und über einen nachgeschalteten Wärmetauscher abgeführt wird. Zur Veränderung der Bremsleistung kann der als Pumpe arbeitende Axialkolbenmotor durch Schwenkung verstellt werden. - Da der bekannte Bremsleistungswandler nur in Verbindung mit einem hydrostatischen Fahrantrieb arbeitet, ist seine Anwendung bei gezogenen motorlosen Fahrzeugen, wie Anhängern oder Schienenwagen, von vornherein nicht möglich. Andererseits verursacht sein Einbau in Motorfahrzeugen aufgrund des erforderlichen Hydromotors zusätzlichen Aufwand sowie Leistungsverluste. Der Aufwand erhöht sich durch die zur Kraftübertragung von Pumpe zu Hydromotor und umgekehrt notwendigen, gleichzeitig eine latente Gefahrenquelle bildenden Hochdruckleitungen sowie durch die für den Bremsbetrieb des hydrostatischen Fahrantriebes notwendigen Stell- und Servoeinrichtungen, um sowohl den als Pumpe arbeitenden Hydromotor zur Veränderung der Fördermenge zu verstellen, als auch die Pumpe in der Nullstellung zu halten. Darüber hinaus ist die Zuverlässigkeit dieses Bremsleistungswandlers gefährdet, weil sein Hydraulikkreislauf wegen der zahlreichen Dichtflächen und Anschlußstellen von Pumpe und Hydromotor und auch wegen der häufig wechselnden Beaufschlagungsrichtung einer ho hen inneren Leckage unterworfen ist.

Die Erfindung hat sich zur Aufgabe gemacht, einen Bremsleistungswandler der eingangs bezeichneten Art dahingehend auszugestalten, daß er zwecks einfacher Unterbringung und/oder nachträglichem Einbau in ein beliebiges Fahrzeug, gegebenenfalls in unmittelbarer Zuordnung zu dessen einzelnen Rädern, einen kompakten Aufbau mit geringem Gewicht erhält und mit hoher Leistungsdichte arbeitet, ohne daß durch hohe Betriebsdrücke Sicherheitsprobleme entstehen.

Diese Aufgabe wird erfindungsgemäß dadurch gelöst,
- daß die Kolbenpumpe aus einer für Betriebsdrücke zwischen ungefähr 300 und 900 bar ausgelegten Hochdruck-Kolbenpumpe besteht,
- daß im Gehäuse der Kolbenpumpe ein Druckkanal und das nachgeschaltete Überdruckventil zu einer kompakten Montageeinheit integriert sind, die zum Antrieb der Pumpenwelle an eine beliebige Stelle des von den Fahrzeugrädern durch Schub erzeugten und in das motorgetriebene oder antriebslose Fahrzeug übertragenen Drehkraftflusses angeschlossen ist,
- und daß der geschlossene Ölkreislauf von einem Ausgleichsbehälter aus mittels eines unabhängigen Elektro-Pumpaggregates ständig auf eine Mindestvorspannung von ungefähr 10 bar aufgeladen sowie hinsichtlich seiner inneren Leckölverluste nachgefüllt wird.

Die Auslegung der Kolbenpumpe auf den angegebenen Bereich sehr hoher Betriebsdrücke gewährleistet bei hoher Leistungsdichte ein kleines Volumen an Arbeitsflüssigkeit und dementsprechend kleine Abmessungen von Pumpe und Leitungsquerschnitten. Da die hochgespannte Arbeitsflüssigkeit bereits an dem im Pumpengehäuse untergebrachten Überdruckventil entspannt wird, entfällt jegliche gefährdende Hochdruckbeanspruchung externer Hydraulikleitungen. Ein grundsätzlicher Vorteil gegenüber dem vorbeschriebenen Stand der Technik besteht darin, daß während des normalen ungebremsten Fahrbetriebes kein Ölstrom fließt und in der Pumpe kein Kolbendruck entsteht und somit auch keine Verlustleistung auftritt. Die integrierte Unterbringung von Druckkanal und nachgeschaltetem Überdruckventil im Pumpengehäuse ermöglicht die gesuchten geringen Abmessungen des Wandlers, mit denen er an jeder geeigneten Stelle des Antriebszuges, z.B. auch an den Rädern des Fahrzeuges eingebaut werden kann, wobei im letzteren Fall die Getriebeteile nicht durch die Übertragung der Bremsleistung beansprucht werden. Die Regelung der Bremsleistung des Wandlers erfolgt über die Fördermengenverstellung der Pumpe oder am Überdruckventil. Indem der geschlossene Ölkreislauf der Pumpe von einem unabhängigen kleinen Elektro-Pumpaggregat ständig auf einen Mindestdruck vorgespannt bleibt, ist der Wandler bei Beginn eines Bremsvorganges sofort zu gegebenenfalls sehr hohen Bremsleistungen betriebsbereit, ohne daß durch das in ihm mit hohem Druck umgepumpte und mit hoher Geschwindigkeit zirkulierende Öl bei den erwünscht kleinen Leitungsquerschnitten Unterdruck bzw. Kavatition entsteht.

Der erfindungsgemäße Bremsleistungswandler wird dadurch weitergebildet, daß zur Anpassung der Bremskraftcharakteristik an das jeweilige Fahrzeug und dessen Masse der Förderdruck der Kolbenpumpe mit Hilfe einer auf die Vorspannung des Überdruckventils einwirkenden, insbesondere servo-betätigten Regeleinrichtung einstellbar ist, die zusätzlich zur Fördermengenverstellung der Pumpe vorgesehen sein kann.

Eine Ausgestaltung des Bremsleistungswandlers sieht vor, daß der die Ölkühleinrichtung enthaltende Teil des Ölkreislaufes durch eine von einem Thermostatventil gesteuerte Bypass-Leitung kurzschließbar ist. Über das Thermostatventil kann somit der Ölkreislauf derart beeinflußt werden, daß das Öl bis zur Erreichung seiner Betriebstemperatur durch die Bypass-Leitung unter Umgehung der Kühleinrichtung zur Pumpe zurückgeführt wird. Zweckmäßigerweise sind auch das Thermostatventil und die Bypass-Leitung im Gehäuse der Kolbenpumpe integriert untergebracht. Außerdem können das Pumpengehäuse sowie der darin integrierte Ausgleichsbehälter eine mit Kühlrippen versehene Montageeinheit bilden.

Bei einer Ausführungsform des Bremsleistungswandlers nach der Erfindung kann ein Teil der Fördermenge der Kolbenpumpe über eine mittels einer Blende an den Druckkanal angeschlossene Abzweigleitung zum Antrieb eines Lüfters der Ölkühleinrichtung und/oder anderer Aggregate abgeleitet sein. Aufgrund dieses Vorschlages kann man den Bremsleistungswandler einschließlich seiner Ölkühleinrichtung als autonome Gesamteinheit vorsehen, die sehr einfach in antriebslose Fahrzeuge, wie Anhänger oder Auflieger oder auch in Motorfahrzeuge ohne Eingriff in den Motor-Kühlmittelkreislauf eingebaut werden kann.

Als Kolbenpumpe kann eine Radial- oder Axialkolbenpumpe mit zwei Wellenenden vorgesehen sein, die zwischen zwei Wellenabschnitten des Antriebstranges, z.B. zwischen Schaltgetriebe und Gelenkwelle oder zwischen dem Ausgangsritzel eines Ausgleichsgetriebes und Gelenkwelle angeschlossen sind.

Zweckmäßigerweise ist in der Axialkolbenpumpe zur Veränderung des Kolbenhubes und damit zur Fördermengenregelung eine bezüglich der Pumpenwelle verstellbare Schwenkscheibe vorgesehen. Gemäß einer Unterbringungsart für Bremsleistungswandler nach der Erfindung kann je eine Kolbenpumpe direkt in jedem Radkopf der Antriebsachse eines Motorfahrzeuges oder der Laufachse eines antriebslosen Fahrzeuges eingebaut sein. Da sich die Fördermenge jeder dieser Pumpen proportional mit der Raddrehung ändert, lassen sich ohne zusätzliche Sensoren Drehzahlabweichungen des einen Rades gegenüber den anderen leicht ermitteln und daraus eventuell erforderliche Kompensationen herbeiführen.

Gemäß einer weiteren Ausführungsform des Bremsleistungswandlers nach der Erfindung wird vorgeschlagen, daß die Ölkühleinrichtung bezüglich des Kühlluftstromes vor dem Motorwasserkühler eines Verbrennungsmotors angeordnet ist. Dadurch kann der Motorlüfter die Kühlluft durch die Ölkühleinrichtung ansaugen, die im Fahrbetrieb keine Wärme abgibt. Im Bremsbetrieb heizt die Ölkühleinrichtung die Luft an und hält dadurch bei langen Talfahrten den Motor-Kühlwasserkreis indirekt warm und läßt den Verbrennungsmotor nicht auskühlen.

Für eine andere Ausführungsform des erfindungsgemäßen Bremsleistungswandlers wird vorgeschlagen, daß zwei Kolbenpumpen in symmetrischer Anordnung jeweils mit den Achswellenabschnitten einer Differentialachse in Getriebeverbindung stehen und durch hydraulische Parallelschaltung ein Ausgleichsgetriebe für gleichmäßige Bremsdrehmoment-Verteilung bilden. Eine Variante dieser Ausführungsform sieht vor, daß zwei mittelbar oder unmittelbar von den Rädern derselben Fahrzeugachse angetriebenen Pumpen anstelle einer Parallelschaltung jeweils einzeln automatisch kurzzeitig vollständig oder teilweise druckentlastbar sind, sobald die Drehung des zugeordneten Rades und damit der Pumpenförderstrom annähernd zum Stillstand gekommen ist (ABS-Wirkung) oder sobald die Differenz der Fördermengen beider Pumpen einen vorbestimmten Wert übersteigt (Antriebsschlupfschutz).

Ausführungsbeispiele des Bremsleistungswandlers nach der Erfindung sind nachfolgend anhand der Zeichnungen näher erläutert. Es zeigen

Fig. 1a-1c verschiedene Möglichkeiten für den Einbau einer Kolbenpumpe als Bremsleistungswandler in einen Motorwagen mit einem Luft-Ölkühler vor dem Motor-Wasserkühler,

Fig. 2 einen Schnitt durch einen Bremsleistungswandler mit einer Axialkolbenpumpe in der Neutralstellung, mit Entspannungsventil, Thermostatregler, einem schematisch angedeuteten Ausgleichsbehälter, Elektropumpenaggregat sowie Luft-Ölkühler mit autonomen hydraulischen Lüfterantrieb,

Fig. 2a      den Bremsleistungswandler nach Fig. 2 mit im Pumpengehäuse integrierten Ausgleichsbehälter,

Fig. 3      den Bremsleistungswandler nach Fig. 2 in Bremstätigkeit bei eingeschaltetem Elektropumpenaggregat und verschwenkter Schwenkscheibe,

Fig. 4      eine Zwischenflanschpumpe, deren linke Seite eine Anschlußfläche für ein Getriebe und deren rechte Seite einen Gelenkwellen-Anschlußflansch aufweist,

Fig. 5      eine nicht angetriebene Fahrzeugachse mit zwei über Kegelräder von den Fahrzeugrädern bzw. -reifen angetriebenen Bremspumpen und

Fig. 5a      schematisch eine fördermengenabhängige Druckregelung als Antiblockiersystem.

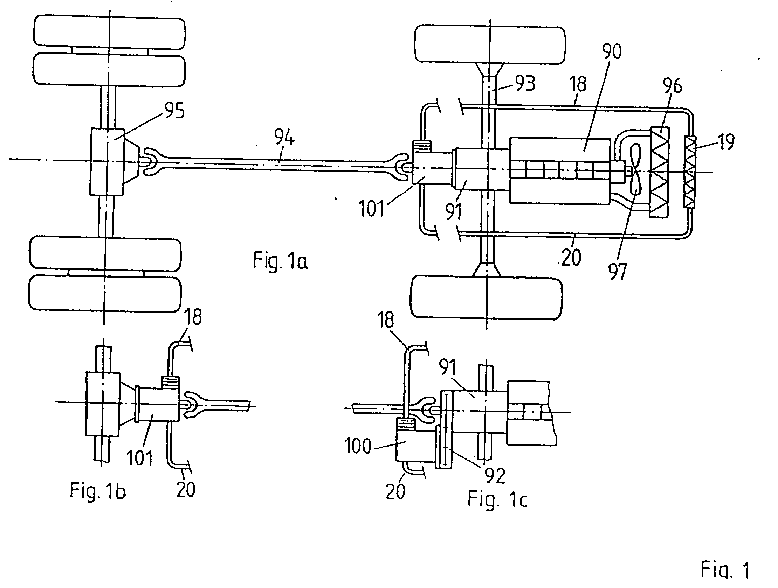

Ein in Fig. 1 gezeigtes Straßenfahrzeug ist mit einem wassergekühlten Verbrennungsmotor 90 und einem Schaltegetriebe 91 versehen, daß gemäß Fig. 1c einen Nebenabtrieb 92 aufweist, ferner mit einer Vorderachse 93 und einer über die Gelenkwelle 94 angetriebenen Hinterachse 95. Der Motor-Wasserkühler 96 wird vom Sauglüfter 97 gekühlt und ist einem Luft-Ölkühler 19 der Bremsanlage nachgeschaltet. Als Beispiel für die Anbringung des Bremsleistungswandlers zeigen

Fig. 1a      eine Flanschpumpe 101 zwischen Getriebe 91 und Gelenkwelle 94,

Fig. 1b      eine Flanschpumpe 101 zwischen Hinterachse 95 und Gelenkwelle 94,

Fig. 1c      eine Flanschpumpe 100 mit einem Wellenende am Nebenabtrieb 92 des Schaltgetriebes 91.

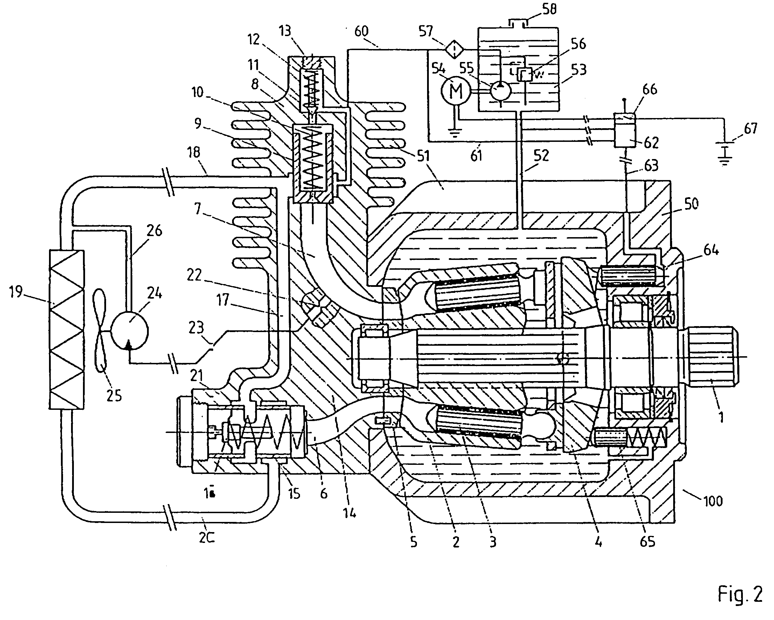

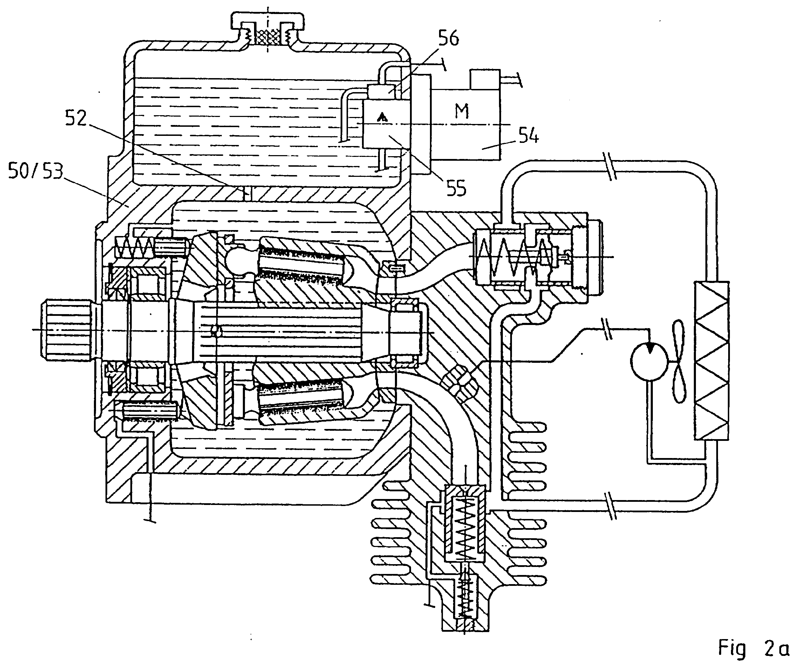

Entsprechend Fig. 2 wird die Pumpenwelle 1 und die Kolbentrommel 2 aufgrund einer nicht gezeigten Verbindung vom Fahrzeug angetrieben. Die Kolben 3 in der Kolbentrommel rotieren mit, machen aber keine Hubbewegung, da die Schwenkscheibe 4 senkrecht zur Pumpenwelle steht. Somit fließt auch kein Ölstrom durch die Steuerscheibe 5 und den daran anschließenden Saugkanal 6 sowie Druckkanal 7.

Der Hauptkolben 9 eines vorgesteuerten Überdruck- oder Entspannungsventiles 8 hält durch Spannung der Hauptfeder 10 den Druckkanal 7 verschlossen. Die Funktion vorgesteuerter Überdruckventile, bei denen die Hauptfeder nur einen kleinen Anteil der Schließkraft aufbringen muß, während der größere Anteil durch den hydraulischen Druck selbst aufgebracht wird, ist allgemein bekannt. Zur Druckverstellung des Ventils wird die Vorspannung der Pilotfeder 12 auf den Pilotkolben 11 verändert. Beim gezeigten Beispiel ist die Federvorspannung fest eingestellt durch eine Verstellschraube 13 auf der Oberseite des mit Kühlrippen 51 versehenen Teils des Pumpendeckels 14. An die Stelle der gezeigten Verstellschraube 13 kann ein Servokolben treten, der die Vorspannung der Pilotfeder 12 und somit den Bremsdruck in verschiedenen geeigneten Abhängigkeiten verändert.

Die Kühlrippen 51 führen am Ventilgehäuse bzw. am Pumpengehäuse und Gehäusedeckel einen Teil der am Überdruckventil 8 entstehenden Wärme direkt an die Luft ab. Auf der Saugseite der Pumpe ist ein thermostatisch betätigter Schieber 15 mit einem Thermokolben 16 gezeigt. Er ist in kaltem Zustand so geschaltet, daß der Bypass oder Kurzschlußkanal 17 mit dem Pumpen-Saugkanal 6 in Verbindung steht. Die sich an den Druckkanal 7 anschließende Ausgangsleitung 18 ist mit dem Eingang einer Ölkühleinrichtung 19 verbunden, und die Rücklaufleitung 20 verbindet den Kühlerausgang mit dem Thermostatgehäuse 21. Wenn der Thermokolben 16 kalt bzw. zusammengezogen ist, sperrt er die über den Kühler 19 führende Rückleitung 20. Vom Druckkanal 7 ist mittels einer Blende 22 eine Druckleitung 23 zu einem hydraulischen Lüftermotor 24 geführt, dessen Lüfterrad 25 Luft durch den Kühler 19 zieht. Die Ausgangsleitung 26 des Lüftermotors ist mit dem Kühlereingang verbunden. Wenn von der Pumpe her kein Ölstrom fließt, bewegt sich der Lüftermotor nicht.

Vom Pumpengehäuse 50 führt eine Leitung 52 zu einem Ausgleichsbehälter 53 mit einem beispielsweise eingebauten Elektro-Pumpaggregat, bestehend aus Elektromotor 52, Niederdruckpumpe 55, Sicherheitsventil 56 und Filter 57. Der Ausgleichsbehälter 53 ist über den Verschlußdeckel 58 mit eingebauter Belüftung mit der Außenluft verbunden. Gemäß dem Ausführungsbeispiel in Fig. 2a ist der Ausgleichsbehälter 59 einschließlich des vorbeschriebenen Pumpaggregates mit dem Pumpengehäuse 50 zu einer Einheit integriert, so daß die Leitung 52 auf eine Bohrung reduziert ist.

Rohrleitungen 60 und 61 führen vom Ausgang der Niederdruckpumpe 55 an die Ausgangsleitung 18 des Ölkreislaufes bzw. an ein Steuergerät 62, das mit einer Servoverstelleinrichtung der Schwenkscheibe 4 über eine Leitung 63 verbunden ist. Die Servoverstelleinrihctung ist allgemein bekannt und deshalb hier nur durch einen Stellkolben 64 und eine Rückstellung 65 angedeutet. Verbunden mit dem Steuergerät 62 ist ein Schalter 66, der im Ruhezustand der Bremspumpe die Stromzuführung aus dem Fahrzeug-Bordnetz 67 unterbricht.

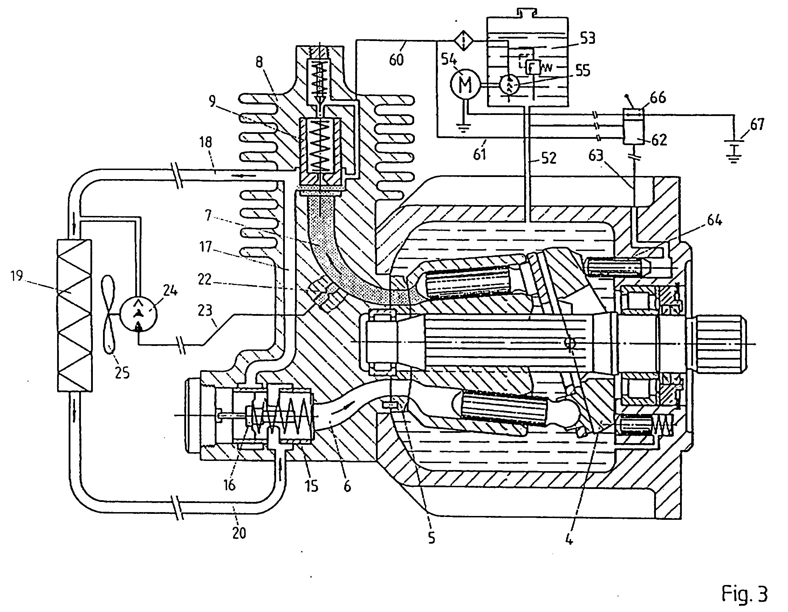

Fig. 3 zeigt den Bremsleistungswandler in Betrieb, wobei die Bremsfunktion wie folgt eingeleitet wird: Der Fahrer oder eine eingebaute Bremssteuerung schließt den Stromkreis zwischen dem Bordnetz 67 und Elektromotor 54 mit Hilfe des Schalters 66. Gleichzeitig wird von Hand oder über einen Elektromagnet das Steuergerät 62 so geschaltet, daß der nun von der Niederdruckmenge 55 erzeugte Druck (ca. 10-20 bar; Fördermenge: ca. 10-20 ltr./min.) den Stellkolben 64 beaufschlagt und dieser die Schwenkscheibe 4 ganz oder teilweise verschwenkt.

Gleichzeitig wird der gesamt Ölkreislauf über die Leitung 60 mit Druck beaufschlagt, so daß in Ausgangsleitung 18, Kühler 19, Rücklaufleitung 20, im Bypass-Kanal 17 und im Saugkanal 6 gleiche Niederdruckbedingungen herrschen. Diese tragen dazu bei, daß bei hohen Drehzahlen der Axialkolbenpumpe gute Saugverhältnisse zur Verfügung stehen, um Kavitation zu vermeiden und um die Lecköölverluste in der Axialkolbenpumpe auszugleichen.

Nachdem die Schwenkscheibe 4 aus ihrer Neutralstellung verschwenkt ist, fließt im Druckkanal 7 ein Ölstrom, der den Hauptkolben 9 des Überdruckventils 8 von seinem Sitz abhebt. Die Ventilvorspannung läßt im Druckkanal einen Hochdruck von z.B. 500 bar entstehen, der sich durch das Öffnen des Überdruckventils entspannt, wobei der Ölstrom aufgeheizt wird.

Vorerst nimmt der Thermostatschieber 15 die in Fig. 2 gezeigte Stellung ein. Deshalb kann der Ölstrom nicht durch den Kühler 19 fließen, sondern gelangt über den Bypass-Kanal 17 direkt in den Saugkanal 6 und wärmt dabei den Thermokolben 16 auf, bis das Öl die Arbeitstemperatur (ca. 40°C) erreicht. Mit sich erwärmendem Öl bewegt sich der Thermostatschieber 15 in die in Fig. 3 gezeigte Position und schließt den Bypass, so daß der Ölstrom durch den Ölkühler 19 fließt. Sobald im Druckkanal 6 Hochdruck aufgebaut ist, fließt über die Blende 22 ein kleiner Ölstrom als Antrieb für den Lüftermotor 24.

Bei vollem Förderstrom (max. Pumpendrehzahl) und höchster Druckeinstellung am Überdruckventil 8 wird die höchste Bremsleistung erzielt. Für eine theoretische Leistungsberechnung ohne Berücksichtigung von Verlusten durch Reibung usw. sei angenommen:

Drehzahl der Pumpe $\quad = 3000$ U/min

Spez. Fördermenge $Q_s \quad = 90$ cm³/U

Fördermenge $Q \qquad = \dfrac{3000 \times 90}{1000} = 270$ ltr./min

Bremsdruck P $\qquad = 500$ bar

Daraus errechnet sich die Leistung des Bremsleistungswandlers zu

$$N = \frac{P \times Q}{612} \, KW = \frac{500 \times 270}{612} = 220 \, KW$$

Die durch die Blende 22 entnommene Ölmenge braucht nicht abgezogen zu werden, da sie ebenfalls um 500 bar gespannt wird.

Die Leistung des Elektromotors 54 errechnet sich aus P = 10 bar und Q = 2 ltr./min zu

$$N_E = \frac{10 \times 2}{612} = 0{,}0326 \, KW \text{ (theoretisch)}$$

Wenn der Stromkreis am Schalter 66 unterbrochen wird, schaltet das Steuergerät 62 die Servosteuerung der Axialkolbenpumpe 100 so, daß der Stellkolben 64 drucklos wird und die Schwenkscheibe 4 in ihre Neutralstellung entsprechend Fig. 2 geht. Damit endet die Ölförderung, der Druck im Druckkanal entspannt sich, und der Lüfter kommt zum Stillstand. Selbstverständlich kann die Pumpe 100 auch so gesteuert werden, daß sie nicht ganz auf Nullhub geht, sondern ständig oder noch eine gewisse Zeit einen kleinen Ölstrom zur Schmierung der Steuerscheibe 5 und zum Wärmeausgleich fördert.

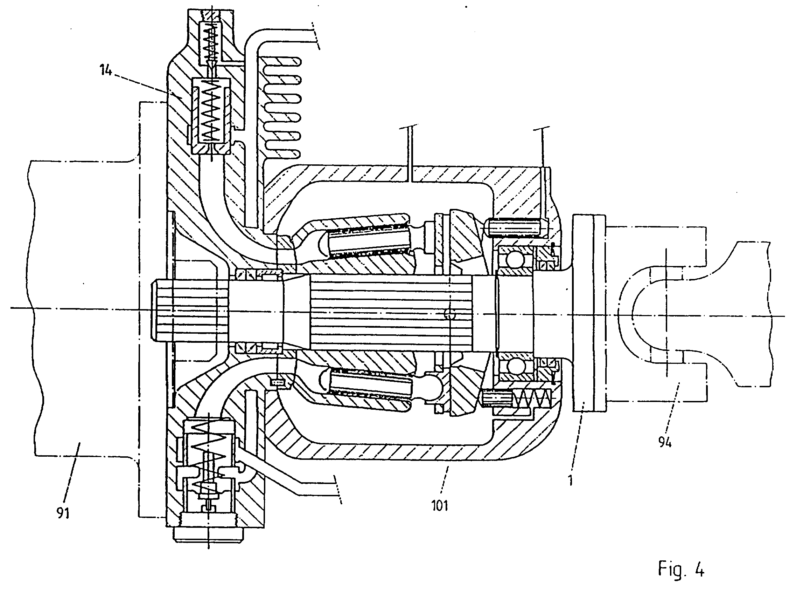

Fig. 4 zeigt eine Axialkolbenpumpe 101 in Zwischenflanschbauart, bei der die Pumpenwelle 1 als Flanschwelle ausgeführt und der Pumpendeckel 14 so verändert ist, daß in seiner Mitte das Ende der Pumpenwelle 1 herausragt, der Pumpendeckel 14 an ein Getriebe 91 angeflanscht und auf der anderen Seite die Pumpenwelle an die Gelenkwelle 94 angeschlossen werden kann.

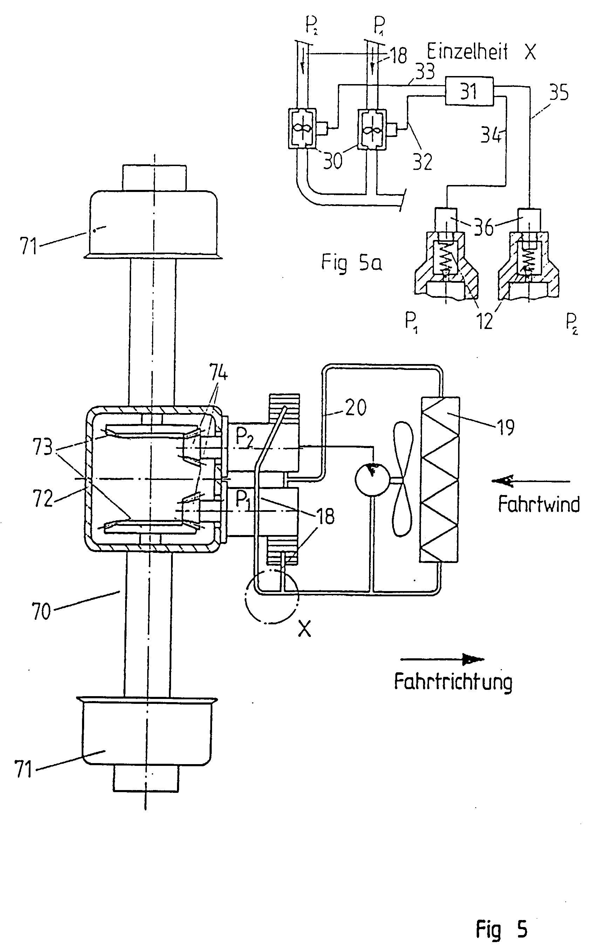

Fig. 5 zeigt eine Anhängerachse 70 mit Reibungsbremsen 71 an den Fahrzeugrädern und einem beispielsweise als Doppelkegelradgetriebe ausgebildeten mittleren Getriebegehäuse 72, in dem je ein großes Tellerrad 73 von jeder Radseite angetrieben ist. Über kleine Kegelritzel 74 werden zwei Axialkolbenpumpen P1 und $P_2$ der in Fig. 2 gezeigten Bauart angetrieben, die zur Erzielung des Ausgleichs bei Kurvenfahrt parallel geschaltet sind. Die Ölkühleinrichtung 19 besitzt den besonders für Anhänger zweckmäßigen autonomen Lüfterantrieb und ist so in den Fahrtwind gestellt, daß dieser den Lüfter unterstützt. Das Getriebegehäuse 72 kann als Ausgleichsbehälter für beide Pumpen $P_1$ und $P_2$ dienen.

Entsprechend Fig. 5a kann für eine gezogene Achse eines Fahrzeugs ein Antiblockier-Effekt dadurch erzielt werden, daß in beiden Ausgangsleitungen 18 der Pumpen $P_1$ und $P_2$ Durchflußmesser 30 eingebaut werden, die ihre Meßimpulse über die Meßleitungen 32 und 33 an ein Steuergerät 31 weitergeben. Da die Ölfördermenge proportional zu den Umdrehungen des jeweils angetriebenen (gebremsten) Rades ist, kann beim Blockieren oder schon bei relativem Drehzahlabfall eines Rades zum anderen das Steuergerät 31 über die Steuerleitungen 34 und 35 eine Druckentlastung der jeweiligen Pumpe veranlassen, bis ein annähernder Gleichlauf beider Räder wieder hergestellt ist. Zur Druckveränderung an den Überdruckventilen 8 der Pumpen dienen Verstellgeräte 36, welche die Pilotfedern 12 be- oder entlasten und somit den Arbeitsdruck des jeweiligen vorgesteuerten Überdruckventils 8 verändern.

**Patentansprüche**

1.  Bremsleistungswandler in Form einer von mechanischer Reibung unabhängigen Langzeitbremse für ein selbstfahrendes oder gezogenes Fahrzeug, bestehend aus einer vom Schub des Fahrzeuges, proportional zur Fahrgeschwindigkeit angetriebenen und bis zu einer Nullförder- oder Minimalfördermenge verstellbaren hydraulischen Kolbenpumpe, die mit einem druckseitig nachgeschalteten Überdruckventil sowie einer dem Überdruckventil nachgeschalteten Ölkühleinrichtung in einem geschlossenen Ölkreislauf angeordnet sind,
    **dadurch gekennzeichnet,**
    - daß die Kolbenpumpe aus einer für Betriebsdrücke zwischen ungefähr 300 und 900 bar ausgelegten Hochdruck-Kolbenpumpe (1 bis 5) besteht,
    - daß im Gehäuse (50) der Kolbenpumpe ein Druckkanal (7) und das nachgeschaltete Überdruckventil (8) zu einer kompakten Montageeinheit integriert sind, die zum Antrieb der Pumpenwelle (1) an eine beliebige Stelle des von den Fahrzeugrädern durch Schub erzeugten und in das motorgetriebene oder antriebslose Fahrzeug übertragenen Drehkraftflusses angeschlossen ist;
    - und daß der geschlossene Ölkreislauf von einem Ausgleichsbehälter (53) aus mittels eines unabhängigen Elektro-Pumpaggregates (54, 55) ständig auf eine Mindestvorspannung von ungefähr 10 bar aufgeladen sowie hinsichtlich seiner inneren Leckölverluste nachgefüllt wird.

2.  Bremsleistungswandler nach Anspruch 1, dadurch gekennzeichnet, daß zur Anpassung der Bremskraftcharakteristik an das jeweilige Fahrzeug und dessen Masse der Förderdruck der Kolbenpumpe (1 bis 5) mit Hilfe einer auf die Vorspannung des Überdruckventils (8) einwirkenden, insbesondere servobetätigten Regeleinrichtung (13) einstellbar ist.

3.  Bremsleistungswandler nach Anspruch 1 oder 2, dadurch gekennzeichnet, daß der die Ölkühleinrichtung (19) enthaltende Teil des Ölkreislaufes durch eine von einem Thermostatventil (15) gesteuerte Bypaß-Leitung (17) kurzschließbar ist.

4.  Bremsleistungswandler nach einem der vorhergehenden Ansprüche, dadurch gekennzeichnet, daß auch das Thermostatventil (15) und die Bypaß-Leitung (17) im Gehäuse (50) der Kolbenpumpe integriert untergebracht sind.

5.  Bremsleistungswandler nach einem der vorhergehenden Ansprüche, dadurch gekennzeichnet, daß das Pumpengehäuse (50) sowie der darin integrierte Ausgleichsbehälter (53) eine mit Kühlrippen (51) versehene Montageeinheit bilden.

6.  Bremsleistungswandler nach einem der vorhergehenden Ansprüche, dadurch gekennzeichnet, daß ein Teil der Fördermenge der Kolbenpumpe (1 bis 5) über eine mittels einer Blende (22) an den Druckkanal (7) angeschlossenen Abzweigleitung (23) zum Antrieb eines Lüfters (25) der Ölkühleinrichtung (19) und/oder anderer Aggregate abgeleitet ist.

7.  Bremsleistungswandler nach einem der vorhergehenden Ansprüche, dadurch gekennzeichnet, daß als Kolbenpumpe eine Radial- oder Axialkolbenpumpe (100; 101) mit zwei Wellenenden vorgesehen ist, die zwischen zwei Wellenabschnitten des Antriebsstranges, z.B. zwischen Schaltgetriebe und Gelenkwelle, oder zwischen dem Ausgangsritzel eines Ausgleichsgetriebes und Gelenkwelle, angeschlossen sind.

8.  Bremsleistungswandler nach einem der vorhergehenden Ansprüche, dadurch gekennzeichnet, daß in der Axialkolbenpumpe zur Veränderung des Kolbenhubes und damit zur Fördermengenregelung eine bezüglich der Pumpenwelle (1) verstellbare Schwenkscheibe (4) vorgesehen ist.

9.  Bremsleistungswandler nach einem der vorhergehenden Ansprüche, dadurch gekennzeichnet, daß je eine Kolbenpumpe direkt in jedem Radkopf der Antriebsachse eines Motorfahrzeuges oder der Laufachse eines antriebslosen Fahrzeuges eingebaut ist.

10. Bremsleistungswandler nach einem der vorhergehenden Ansprüche, dadurch gekennzeichnet, daß die Ölkühleinrichtung (19) bezüglich des Kühlluftstromes vor dem Motorwasserkühler (96) eines Verbrennungsmotors (90) angeordnet ist.

11. Bremsleistungswandler nach einem der vorhergehenden Ansprüche, dadurch gekennzeichnet, daß zwei

Kolbenpumpen (P$_1$, P$_2$) in symmetrischer Anordnung jeweils mit den Achswellenabschnitten einer Differentialachse (70) in Getriebeverbindung stehen und durch hydraulische Parallelschaltung ein Ausgleichsgetriebe für gleichmäßige Bremsdrehmoment-Verteilung bilden.

**12.** Bremsleistungswandler nach Anspruch 11, dadurch gekennzeichnet, daß zwei mittelbar oder unmittelbar von den Rädern derselben Fahrzeugachse angetriebene Pumpen (P$_1$, P$_2$) anstelle einer Parallelschaltung jeweils automatisch kurzzeitig vollständig oder teilweise druckentlastbar sind, sobald die Drehung des zugeordneten Rades und damit der Pumpenförderstrom annähernd zum Stillstand gekommen ist (ABS-Wirkung) oder sobald die Differenz der Fördermengen beider Pumpen einen vorbestimmten Wert übersteigt (Abtriebsschlupfschutz).

## Claims

**1.** Braking energy converter acting as a long-term brake inde- pendent from mechanical friction for a self-propelled or drawn vehicle, consisting of a hydraulic piston pump, which is driven by the thrust of the vehicle proportionally to the travelling speed and adjustable down to a zero or minimum delivery and which, together with a pressure relief valve connected to its pressure side and an oil cooler at the outlet side of the pressure relief valve, are grouped in a closed oil circuit,
characterized
- in that the piston pump consists of a high pressure piston pump (1 to 5) construed for operating pressures between about 300 and 900 bar,
- in that a pressure duct (7) and the pressure relief valve (8) connected to the outlet side are integrated in the housing (50) of the piston pump to form a compact mounting unit, which with the pump shaft (1) to be driven is coupled to any place of the flux of rotational forces produced by thrust of the vehicle wheels and transmitted into the motor-driven or non-motorized vehicle;
- and in that the closed oil circuit is continuously charged from an equalizing reservoir (53) by means of an independent electro pump unit (54, 55) to a minimum preload of about 10 bar and is replenished in view of its inner leakage oil losses.

**2.** Braking energy converter as in claim 1, characterized in that the feed pressure of the piston pump (1 to 5) is adapted for adjustment by means of a preferably servo-controlled regulating means (13) acting on the preload of the pressure relief valve (8) for adapting the characteristic of the braking power to the respective vehicle and its weight of mass.

**3.** Braking energy converter as in claim 1 or 2, characterized in that the portion of the oil circuit including the oil cooler (19) is adapted to be short-circuited by means of a bypass line (17) controlled by a thermostat valve (15).

**4.** Braking energy converter as in one of the preceding claims, characterized in that also the thermostat valve (15) and the bypass line (17) are integrally accommodated in the housing (50) of the piston pump.

**5.** Braking energy converter as in one of the preceding claims, characterized in that the pump housing (50) and the equalizing reservoir (53) integrated thereto from a mounting unit being provided with cooling ribs (51).

**6.** Braking energy converter as in one of the preceding claims, characterized in that a part of the delivery of the piston pump (1 to 5) is routed away through a branch line (23) connected to the pressure duct (7) by means of a restrictor aperture (22) for driving a fan (25) of the oil cooler (19) and/or other aggregates.

**7.** Braking energy converter as in one of the preceding claims, characterized in that as piston pump a radial-piston or axial-piston pump (100; 101) having two shaft ends is provided, which are connected between two shaft portions of the drive line, e.g. between shifting gearbox and articulated drive shaft, or between the output pinion of a differential gear and articulated drive shaft.

**8.** Braking energy converter as in one of the preceding claims, characterized in that as swash plate (4) adjustable relative to the pump shaft (1) is provided within the axial-piston pump to alter the piston stroke and thereby to control the delivery.

9. Braking energy converter as in one of the preceding claims, characterized in that one piston pump each is mounted directly in each wheel hub of the driving axle of a motor-driven vehicle or of the dead axle of a non-motorized vehicle.

10. Braking energy converter as in one of the preceding claims, characterized in that the oil cooler (19) is situated in front of the water cooler (96) of a combustion motor (90) with respect to the cooling air stream.

11. Braking energy converter as in one of the preceding claims, characterized in that two piston pumps ($P_1$, $P_2$) in symmetrical grouping each are in geared connection with the axle shaft portions of a differential axle (70), and by hydraulic parallel connection provide for a differential gear to ensure uniform braking torque distribution.

12. Braking energy converter as in claim 11, characterized in that two pumps ($P_1$, $P_2$) driven directly or indirectly by the wheels of the same axle of a vehicle, instead of being connected in parallel, each are adapted to be automatically, temporarily, completely, or partially relieved from pressure as soon as the rotation of the related wheel and so the pump delivery stream have come to approximate standstill (ABS-effect), or as soon as the difference between the deliveries of both pumps surmounts a predetermined value (protection against slippage).

## Revendications

1. Convertisseur d'énergie de freinage constitué par un ralentisseur sans friction mécanique, pour un véhicule automobile ou tracté, composé d'une pompe hydraulique à pistons, entraîné par la poussée du véhicule, proportionnellement à la vitesse de la marche, et qui peut être réglé jusqu'à un débit de refoulement nul ou minimum, qui est associé à une soupape de surpression montée en aval côté refoulement, ainsi qu'à un dispositif de refroidissement de l'huile placé en aval de la soupape de surpression, en un circuit d'huile fermé,
caractérisé
   - en ce que la pompe à piston est composée d'une pompe à piston à haute pression (1-5) calculée pour des pressions de service allant d'environ 300 à 900 bars,
   - en ce que, dans le corps (50) de la pompe à piston, un canal de pression (7) et la soupape de surpression (8) montée en aval sont intégrés en une unité de montage compacte, qui est raccordée pour l'entraînement de l'arbre (1) de la pompe à une zone quelconque du flux de force motrice rotative produite par les roues du véhicule se déplaçant en poussée et transmis au véhicule à moteur ou dépourvu d'entraînement,
   - et en ce que le circuit d'huile fermé est constamment chargé, à partir d'un réservoir de compensation (53), au moyen d'un groupe électro-pompe indépendant (54, 55), à une pression initiale minimale d'environ 10 bars et complété de ses pertes d'huile par fuites internes.

2. Convertisseur d'énergie de freinage selon la revendication 1, caractérisé en ce que, pour adapter la caractéristique de force de freinage au véhicule considéré et à sa masse, la pression de refoulement de la pompe à piston (1 à 5) peut être réglée à l'aide d'un dispositif de régulation (13), notamment servocommandé, qui agit sur le tarage de la soupape de surpression (8).

3. Convertisseur d'énergie de freinage selon la revendication 1 ou 2, caractérisé en ce que la partie du circuit d'huile qui comprend le dispositif de refroidissement d'huile (19) peut être court-circuitée par une conduite de by-pass (17) commandée par une soupape thermostatique (15).

4. Convertisseur d'énergie de freinage selon une des revendications précédentes, caractérisé en ce que la soupape thermostatique (15) et la conduite de by-pass (17) sont elles aussi logées intégrées dans le corps (50) de la pompe à pistons.

5. Convertisseur d'énergie de freinage selon une des revendications précédentes, caractérisé en ce que le corps (50) de la pompe, ainsi que le réservoir (53) qui y est intégré forment une unité de montage munie d'ailettes de refroidissement (51).

6. Convertisseur d'énergie de freinage selon une quelconque des revendications précédentes, caractérisé en ce qu'une partie du débit de refoulement de la pompe à pistons (1 à 5) est dérivée, par l'intermédiaire d'une conduite de dérivation (23) raccordée au canal de refoulement (7) au moyen d'un orifice (22), pour l'entraînement d'un ventilateur (25) appartenant au dispositif de refroidissement d'huile (19) et/ou pour l'entraînement d'autres organes.

7. Convertisseur d'énergie de freinage selon une quelconque des revendications précédentes, caractérisé en ce qu'il est prévu, comme pompe à piston, une pompe à pistons radiaux ou axiaux (100 ; 101) possédant deux bouts d'arbres, qui sont raccordés entre deux segments d'arbres de la chaîne cinématique, par exemple entre la boîte de vitesses et l'arbre de transmission ou entre le pignon de sortie d'un différentiel et l'arbre de transmission.

8. Convertisseur d'énergie de freinage selon une quelconque des revendications précédentes, caractérisé en ce que, dans la pompe à pistons axiaux, il est prévu un plateau oxillant (4) réglable par rapport à l'arbre (1) de la pompe, pour assurer la variation de la course des pistons et, de cette façon, la régulation du débit de refoulement.

9. Convertisseur d'énergie de freinage, selon une quelconque des revendications précédentes, caractérisé en ce que la pompe à pistos est incorporée directement dans chaque tête de roue de l'essieu moteur d'un véhicule automobile ou de l'essieu porteur d'un véhicule dépourvu de groupe propulseur.

10. Convertisseur d'énergie de freinage selon une der revendications précédentes, caractérisé en ce que le dispositif de refroidissement d'huile (19) est agencé en amont du radiateur d'eau (96) d'un moteur à combustion interne (90) considéré par rapport au courant d'air de refroidissement.

11. Convertisseur d'énergie de freinage selon une der revendications précédentes, caractérisé en ce que deux pompes à piston ($P_1$, $P_2$) sont en liaison cinématique, dans une disposition symétrique, respectivement avec les demi-arbres d'un essieu à différentiel (70), et forment, par connexion hydraulique en parallèle, un différentiel pour la répartition uniforme du couple de freinage.

12. Convertisseur d'énergie selon la revendication 11, caractérisé en ce qu'en remplacement d'un montage en parallèls, deux pompes ($P_1$, $P_2$) entraînées indirectement ou directement par les roues du même essieu du véhicule peuvent être entièrement ou partiellement déchargées de pression en un temps bref et automatiquement, dès que la vitesse de rotation de la roue correspondante, et par conséquent, le débit de refoulement de la pompe sont presque arrêtés (effet ABS) ou dès que la différence entre les débits de refoulement der deux pompes devient supérieure à une valeur prédéterminée (protection contre le patinage en propulsion).

Fig. 1a

Fig. 1b

Fig. 1c

Fig. 1

Fig. 2

Fig 2a

EP 0 427 116 B1

Fig. 3

Fig. 4

$P_2$   $P_1$

18

Einzelheit X

33

31

35

34

30   32

36

Fig 5a

12

$P_1$   $P_2$

71

74

73

72

$P_2$

20

19

$P_1$

18

Fahrtwind

70

X

Fahrtrichtung

71

Fig 5